# EUROPEAN PATENT APPLICATION

(11) **EP 2 083 193 A1**
(43) Date of publication of application: **29.07.2009**
(21) Application number: 09386001.3
(22) Date of filing: 22.01.2009
(51) Int. Cl.: F16H 3/76, B60K 17/346

(54) **Controlled transmission differential with electric engine and/or self-regulated**

(30) Priority: 25.01.2008 GR 20080100048
(71) Applicant: Mastrokalos, Antonis, 84003 Sifnos (GR)
(72) Inventor: Mastrokalos, Antonis, 84003 Sifnos (GR)

(57) **Abstract**

Controlled-transmission differential, with electric engine and/or self-regulated, consisting of parabolic gears which receive the motion from their carrier (5) and transfer it in a controlled manner, with the intervention of an electric engine (16) and/or a circular follower, directly to the gears of the planets, which are mounted on disks (6, 7) at the internal ends of the half-axles (39, 41) and which also have a parabolic shape, without the intervention of other mechanical elements. The shafts of the satellites may change their rotation angle in relation to the middle vertical which passes through the rotation shaft of the planets (11, 14), and which ends to the disks of the half-axles (6, 7) by radial splines (55) and conical springs (12) compensating thermal constrictions/expansions, or compensating/reducing tolerances of sudden load variation. In order to achieve the angular change in the position of the rotation shaft of the satellites the electric engine, or hydraulic oscillator (15, 16) cooperate in combination with the lever arms (23) and bars of four fixing/rotation points (25), which are located on the periphery of the satellite carrier, ad three corresponding ones on the center thereof, with the effect of two coaxial satellite shafts (28, 29) sliding one in the other, or by the use of elliptic fissures (57) on one planet, in the case of the self-regulated differential

## Description

The invention relates to a differential, the satellites of which have a parabolic gear shape, and receive motion from their carriers by conical gears and transfer it in a controlled manner, by the invervention of the electric engine and/or a circular follower, directly to the gears of the planets, the gears being mounted on disks in the internal ends of the half-axles, and having also a parabolic shape, without the intervention of other mechanical means.

By the term parabolic gear shape we refer to the shape of the gears by which a different incidence angle of the gear teeth is obtained. By the specific way, a different relation during the rotation of the one gear in respect to the other is obtained, resulting to a different kind of speed. In order to have a full contact of the teeth throughout the rotation, the conical springs (12) interposed between the planets and the respective half-axles are used.

The specific configuration is used in the motion of all vehicles, and others.

Either as a central four-wheeled motion differential, where we further have a continuous and full control with the simplest form and few components. There are no limitations to response stages to one or two scales, as it is the case for the differentials of the modem structure developments, where in order to avoid these problems the differential structures are complex, which comprise their dependence on single or double epicyclic multipliers with parallel use of hydraulic systems, electromagnetic brakes and multi-disk clutches. The differential is suitable either for use in front wheels or in back wheels, or simply as a differential of a rear wheel system. It is presented in two types: first the continuously variable type by means of sensors, and having an electric engine, and the second is the self-regulated by using circular followers.

A feature of the present invention is that the operation or efficiency parameters are fully controlled and variable by mechanical or electric or electronic elements.

The previous patents oblige the manufacturers to use various multiple systems, by using single or double epicyclic systems, alternatively activated or deactivated, with the parallel cooperation of electromagnetic brakes and multi-disk clutches, resulting to a step-wise, instead of continuous, smooth flow of the relation stage, from the one side of the vehicle to the other, or from a planet-half axle of the one side to the other. The problems depended on the conditions, such as the number of differentials installed in a vehicle, the position thereof, in order to achieve the highest efficiency between them, in particularly in the bevaviour or cooperation of the rear four-wheel drive differential, with those of the central and the front wheels or half axles, i.e. those responsible for the diversion of a vehicle from the proper path. The arrangement of the differential described below, in combination with a trigger (hier the electric engine), so that the gradual angle diversion of the rotation shaft of the satellites is achieved, to the one or the other side of the planets for the smooth and reciprocal continuous stage of the rotational speeds between planets-half axles, allowing acceleration or deceleration, and thus various problems of the differentials are solved.

Further characteristics of the invention and the advantages thereof are explained by means of the accompanying figures.

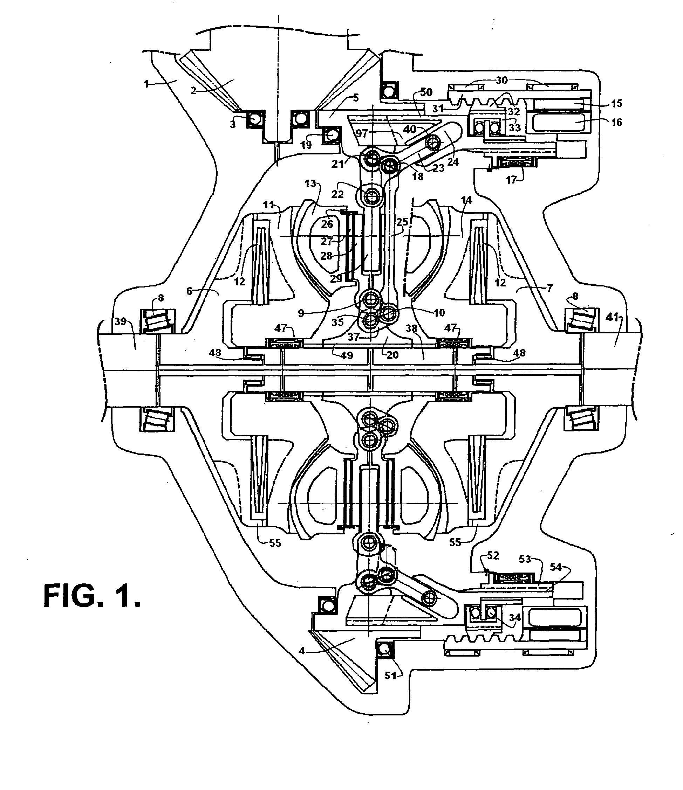

Figure 1 shows in side view a differential of continously controlled transmission by means of an electric engine and a servo mechanism, which belongs to the first type. The command signals for the speed variation to the half axles may be derived from the pedal system, or by adhesion sensors or speed diversion sensors, or a combination thereof. The commands are executed by an electric engine arranged on the periphery of the body or on the shell of the differential and are transferred to a cylinder for execution, which is mounted on the rotor of the electric engine, its internal periphery being configured to an endless screw. The endless screw meshes with a thread located on an adjusting ring which has guide forks, which in turn by meshing with arms and bars cause the angular diversion of the rotation angle of the satellites around their axis, which consists of two concentric shafts sliding one in the other. This diversion of the satellite axis from their mean perpendicular position of rotation or moment equipartition to the two planets-half axes,, which is obtained from their ring or carrier from the one side to the other side, where the gears thereof are meshed with the gears of the disks of planets-half axles, cause a reciprocally analogous rotation transmission, from the one planet-half axle gear to the other, by means of the satellites, resulting to a loss of the constant-speed motion and a differentiation thereof between the planets. This reciprocally analogous speed production depends on the conditions of safe course of the vehicle, thus the selected ratio command, or the angular deviation which the rotation shaft of the satellites will acquire, due to the change in the diametrical meshing or coupling point between the gear teeth, the planets-half axles with the intermediate satellites. Thus on time moments or periods where the speeds between the sides, the planets-half axles are not constant, and the planet of the one side, due to the conditions, has been accelerated, due to the series or sequence of meshing and motion transmission, the accelerated planet forces the satellites to rotate also around their axis, and not only around the shaft of the satellite carrier and to follow it in the direction in which it is accelerated. The satellites follow the accelerated planet and create a reverse rotation direction condition to the planet of the one side, in the series of meshing and motion transmission, forcing it to decelerate, in relation to the accelerated planet. The disks of the gears of the planets/half axles are two with conical springs between them, for vibration absorption, compensation of constrictions/expansions and minimization of any tolerances which may be caused by violent variations in the range of rotations or loads. In the known position there are the conical gears providing and receiving motion (pinion-ring).

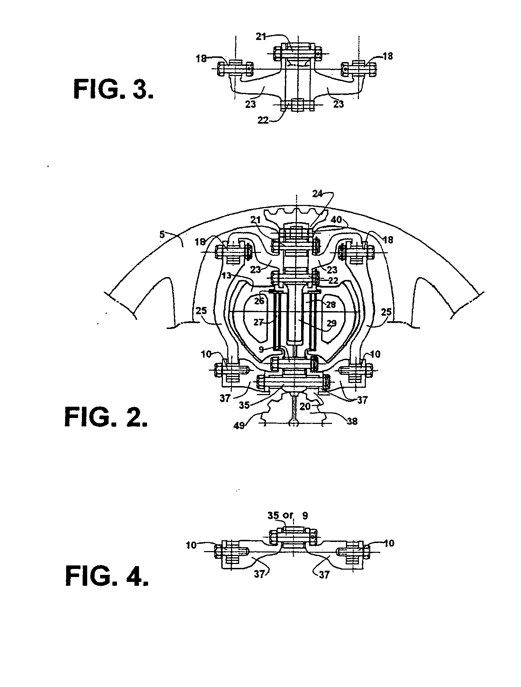

Figure 2 shows in partial front view a part of the satellite carrier in the form which have the twin arms and the connecting bars, as well as at the articulation points with the pins, and how these are connected between them for convenient operation of the unit.

Figure 3 shows in plan view the twin arm for ratio control, of the periphery which converts the received command from the electric engine and the forks to linear motion and by angular variation of the rotation axis of the satellites, it causes the revolution change on the planets-half axles. This is mounted on the periphery of the carrier.

Figure 4 shows the form of the twin center arm, in relation to figure 2 in plan view. This in combination with the arm of the periphery and the connecting bars by the formed trapezoid achieve by means of the concentric sliding shafts of the planets the angular variation of the shaft of the latter, in order to change the rotational speed of the planets-half axles.

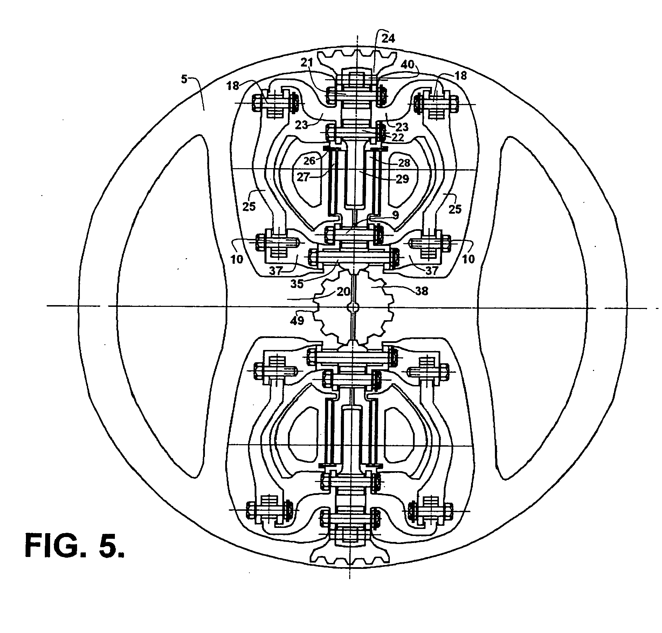

Figure 5 shows in general view the satellite carrier with the twin arms and the connecting bars, as described in the previous figures. Also it shows the integrated form of the body of the carrier as well as the connecting spline segment of the central segment of satellite carrier with the intermediate free-rotation shaft.

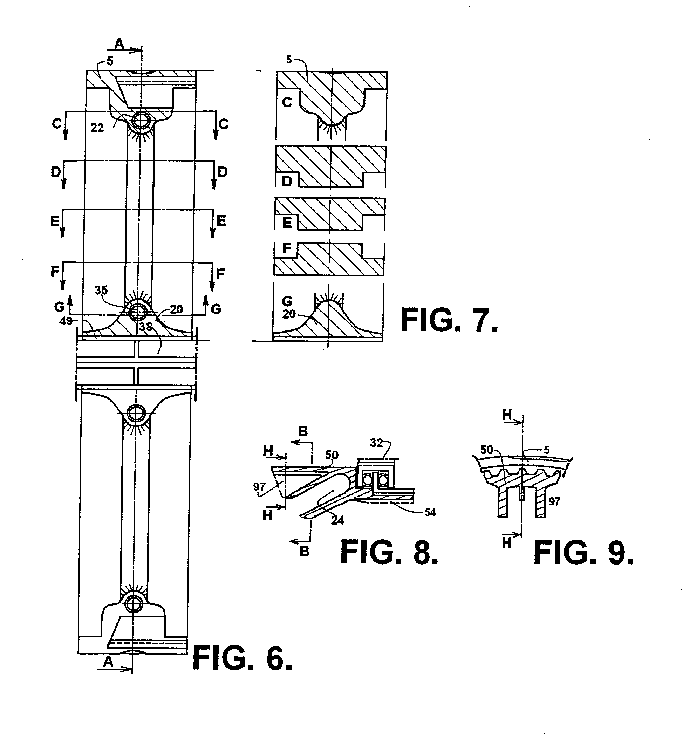

Figure 6 shows the body of the satellite carrier in side view at the points where the lever arm pins are located.

Figure 7 shows the various individual cross-section forms of the body of the satellite carrier, in various perpendicular distances.

Figure 8 shows in parts the fork with the dove tail, as well as the intermediate extension or tail for additional reinforcement. Also it comprises the carrier of the thrust bearings.

Figure 9 shows a side of the fork, its side with the intermediate fixing extension and the twin members, which transfer the revolution or ratio variation commands.

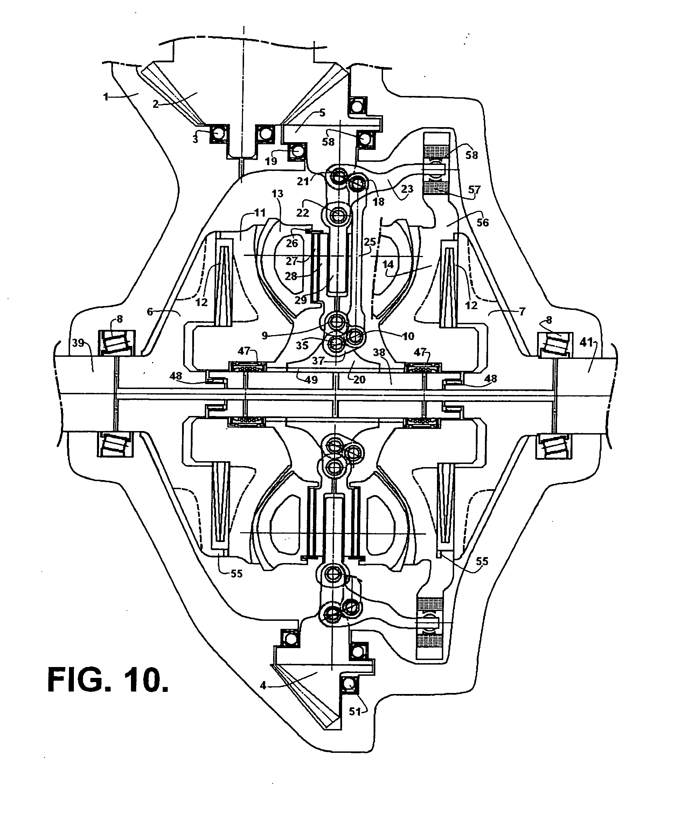

Figure 10 shows the differential of the first type, the self-regulated one. The general construction is the same as of the first type, and it is equipped with parabolic gears of satellites and planets. The way that the recognition of the needs for variation of the rotational speed of the half axles, is different, which is derived from the adhesion and the direct active response, via the elliptic fissures which are opened at the periphery of the extensions of one of the internal disks of the planets-half axles. On each fissure there is a circular follower -rod end bearing-which even under the slightest difference in the rotational speed (from the equal) between the half axles, for any reason related to the adhesion of the wheels on the ground changes the angular position being moved into the fissure, in relation to the rotation shaft of the disk of the half axle planet, either converging to the center or removing from the center, as a reaction or from inertia, due to the derived speed difference between planets. Since the circular follower is fixed at the end of the lever arm, which controls the meshing diameters of the gears of the planets and satellites, the correction reaction is instant and reciprocally proportional, in this simple way. Otherwise its behaviour is the same as the one mentioned for the first type.

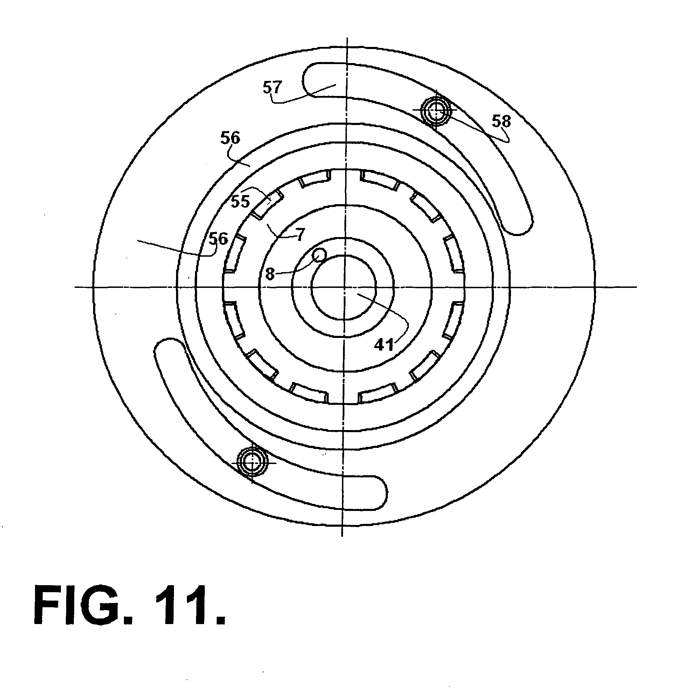

Figure 11 shows a disk of a planet-half axle, in the form of having elliptic fissures, in which the circular followers are located, and may recognise the rotation speed difference between the planets, and in a corresponding manner they have the teeth of the parabolic gears of the satellites in a proper radial meshing position with those of the planets, for direct ratio or rotational acceleration or deceleration speed correction, individually, as necessary for each case or condition.

Referring to the accompanying figures an exemplary preferred embodiment of the invention is given below.

Figure 1 shows a general view of the differential of continuous controlled transmission, by the use of parabolic gears in side view. It belongs to the first type and is controlled by an electric engine. (1) depicts the body or shell of the unit, and (2) depicts the pinion (gear) for motion input to the differential. (3) is the bearing supporting the specific gear (2). The motion input to the gear is effected by the conical spring (4), while (5) is a peripheral sector of the differential carrier. (6) depicts the disk of the left half axle (39), while (12) depicts the conical springs interposed between the disk of the left half axle (6) and the left planet (11). At the other side, there is the disk (7) of the right half axle (41), and between the disk of the right half axle (41) and the right planet (14) the conical springs (12) are also interposed. The springs aim at compensating the shocks, at dealing with the constrictions/expansions and the minimization of the tolerances which may instantly appear due to sudden load variations. The disks of the planets and the half axles are connected between them with a radial spline (55) located at their periphery. The inner surfaces of the disks of the planets, have a hollow configuration with parabolic gear teeth, respective to those of the satellites (13). The satellites are fixed on concentric shafts (28, 29) which can slide axially one in the other. These are surrounded by a needle bearing (27) which by means of a cerclip (26) holds all these with the parabolic satellite (13). The external shaft (28), towards the center is supported to the pin (9) which connected also the shaft (28) to the front (in the figure) twin arm (37) and the arm at one of its two other ends is supported on the central part of the satellite carrier (20) with the pin (35). The other end of the twin arm (37) is connected to the twin connecting bar (25) by the pin (10). This twin connecting bar at its other end is fixed with the pin (18) to the other twin arm (23) of the periphery of four articulation points. On that twin arm there is a pin (22) which connects to that the internal rotation shaft (29) of the parabolic satellite (13). On the periphery there is the pin (21) which by the arm (23) finally connects the satellite to the periphery of the satellite carrier (5), and thus to the conical gear (4). The fourth point of the shaft (23) is the pin (40), which has a roller on which the revolution adjustment commands between planets-half axles of the differential are sent. A reversible electric engine (16) is intended to receive the revolution adjustment signals. On its rotor (15) an adjusting cylinder (31) has been mounting, which has its internal periphery configured as an endless screw. This is in constant contact with the thread (32) opposite to it, which belongs to the carrier (33), which contains the two thrust bearings (34) for the smooth transfer of commands. The carrier (33) is fixed with the adjusting ring (5) on which at an area a dovetail and a fork (24) has been configured with an intermediate reinforcement extension (97). The purpose of the dovetail and the reinforcement extension is the retention of the adjusting ring on the planet carrier (5) without play. If now, the receiver of the signal, the electric engine, for any reason provides a revolution adjustment or recovery command, then depending on the signal it will turn to the right or left, and this motion being transferred from the thread of the endless screw (31) to the thread (32) of the carrier of the bearings (33), from rotational is converted to linear. This linear motion now transfers the adjusting ring (50) which has the fork (24) axially to the cylinder of the satellite carrier. By this linear displacement, by the application of force on the arm (23) to the point on which the pin with the roller (40) is located, a torque couple is formed. The result of the torque couple is the angular alteration of the rotation shaft of the satellites. Thus, with this angular alteration, the contact of the teeth of the parabolic gears of the satellites (13) with those of the planets (11, 14) changes in different diameters. As a result, the rotational motion transferred from the planet-half axle (39) of the one side, via the satellites, to the planet-half axle (41) of the other, on the moment or period needed so that the rotational speed of the planets-half axles is modified, by the rotation of the satellites also around their axis, and not only around the axis of their carrier, is not only of opposite rotation direction but also reciprocally proportional to the rotational deceleration. The reason for that is that not only the angular diversion of the rotation shaft of the satellites, but also the contribution of the parabolic shape, which allows the transition of meshing points or zones to continuously variable, between them, radius or diameter. If the conditions of safe course and operation of the vehicle demand or allow the equal motion transmission to both planets-half axles (39, 41), the signal or command is that the concentric rotation shafts (28, 29) of the satellites (13) are perpendicular to the rotation axis of the planets-half axles (39, 41) and of the satellite carrier (20). If a variation is needed, for example the planet-half axle (14) is located in an acceleration phase, it will entrain to the direction at which the satellites (13) are accelerated, forcing these to rotational motion around their shafts (28, 29), which is transferred during the motion transmission from the satellites to the other planet-half axle (11, 6, 39) in reversal, i.e. it decelerates this planet-half axle.

Of course, in order to avoid the sliding from the desired position, the rotor of the electric engine (15) is equipped with an electromagnetic brake, which fixes the rotor and worm (15,31) during the phases when no correction is needed. The electric engine may be replaced by a hydraulic cylinder or a hydraulic oscillator. The rotor of the electric engine is supported on needle bearings (30). The satellite carrier with the conical gear (corona) (5, 4) is supported at the one side on the bearing (19), and counter-supported on the bearing (51), and furthermore on the other side by the internal side of the extension of the adjustment or correction ring (50) which has the fork, they are supported by the interposition of the ring (53) in the bushing bearings (17), ensuring its support at three points. At the extention of the body of the adjusting loop (50) and to the area internally of the carrier of the thrust bearings (33), their is a spline configuration (54), between the body of the adjusting loop and ring (53). Aim of the spline is to allow the smooth linear displacement of the adjusting loop (50) in relation with the body of the satellite carrier (5) and to the adjusting cylinder (31), for the individually required speed adjustments of the planets-half axles. The satellite carrier is supported at its center on the shaft (38). This is of free rotation and follows the rotational motion of the satellite carrier. Between that and the disk of the planets there are two bushing bearings (47) and also the anti-bending rings (48). Before the output of the half-axles (39, 41) there are the bearings (8) for their support. (52) is the circlip retaining the ring (53).

Figure 2 shows in partial front view a part of the satellite carrier in the form of the twin arms (23, 37) and the twin connecting bars (25), as well as the various articulation points with their pins, and the way these are connected between them, for the smooth operation of the unit and the convenient control thereon.

Figure 3 shows in plan view the form of the twin arms (23), located to the periphery of the satellite carrier, for the transfer of the stage command and the connection pins thereof.

Figure 4 shows in plan view the twin arms (37) located to the center of the satellite carrier, which by cooperation with the twin arms of the periphery (23) and the twin connecting bars (25) effect a stage variation, or retain the control.

Figure 5 shows in front view the satellite carrier with all its suspension, without the support bearings (3) and the conical gear (4) providing motion thereto. Also, the mass voids are shown which serve in the reduction of the weight and inertia. The elements with their numbers have been described in the detailed description of figure 1.

Figure 6 shows individually the body of the satellite carrier (5) in side view with the position points of the pins (22, 35) of the twin control arms (23, 37) of the center and periphery. The area of the body in which the configuration of the dovetail as well as the reception in which the reinforcement extension (97) of the fork is shown. Also the central part of the satellite carrier (20) and the support shaft therof (38) are shown, as described in figure 1.

Figure 7 shows various individual forms of cross-sections of the body of the satellite carrier, in various perpendicular distances from the center according to the references of the adjacent figure 6.

Figure 8 shows partially in side view, the fork (24) which is configured on the body of the adjusting loop (50), the area with the dovetail and the intermediate reinforcement extension thereof (97). Also it comprises the carrier of the thrust bearings (32). The configuration in the internal area of the spline (54) is shown, for the smooth linear displacement of the adjusting loop, as described above, on the ring (53) (not shown).

Figure 9 shows in perspective view the fork (24), at the side thereof which has the intermediate reinforcement extension (97) and its twin arms, which transfer the rotation or ratio variation/stage commands. The type of the gears in all devices may be linear or helical, on the parabolic forms of the body of planets and half axles.

Figure 10 shows in side view a differential of the second type, self-regulated. As mentioned, its operation is that of the first type, only the way of the direct control and required rotational speed adjustment of the half axles is different. Thus here the electric engine with the adjusting loop and the forks is absent. The position of the effector have been undertaken by the elliptic fissures (57), better shown in figure 11, which are scored at the extension of the disk of the planet (14), of the right (in the figure) half axle (1), in which the circular followers, rod end bearings (58), are located. These followers are fixed at the end part of the lever arm (23). Thus if for any reason, the rotational speed between the half axles (39,41) differs from the equal, and not only from the equal, but also from the individually previous speed, as a result of the ground variation or of the start or end of a curved path-course of the vehicle, or due to the sliding on the ground, etc. then the angular position or the correlation between the planets-half axles and thus of the extension of the disk (56), of one of them, which has the openings of the elliptic fissures (57) to the periphery, changes. As a result, the circular followers (58), depending on the angular alteration, reach to or remove from the center of the rotation shaft of the disk (56), extension of right planet (14) on which they are located, following the elliptic path defined by the form of the fissures. This radial change of the position of the circular followers (58) entrains the ends of the lever arms (23), on which these are supported, changing the position thereof, on the satellite carrier (5) on the pin (31) on which they are supported. As a result of this angular change in the position of the lever arm (23) the elements of the trapezoid shape change, which is formed therefrom and the positions of the concentric satellite shafts (28, 29), of the twin connecting bars (25) and the central arm (37) supporting the satellites in relation with their previous position, in the satellite carrier (20). All these bring the teeth of the satellites to different meshing diameters or radius than those of the bilateral planets-half axles, resulting to the variation of the rotational speed of one planet-half axle being transferred proportional reciprocally, i.e. accelerated or decelerated, in relation to the other, which caused the rotational variation, or the reason that caused the rotational variation on the other. Thus, the adjustment of the rotational speed or proportional stage thereof between the planets-half axles have been achieved as known, described in figure 1.

Figure 11 shows the elliptic fissures (57), which are opened at the radial extension of the disk (56) of the right planet (14) of the same half axle (41), which with the external disk (7) and the insertion of the conical springs (12) and the radial spline (55) supplement the right planet-half axle, of the figure. The position of the bearing (8) supporting the half axle is shown.

## Claims

1. Controlled-transmission differential with electric engine and/or self-regulated, **characterised in that** the satellites have parabolic gears, receive the motion from their carrier, by conical gears (4) and transfer it in a controlled manner, by the intervention of the electric engine, and/or a circular follower, directly to the gears of the planets (11, 14) which are mounted on disks (6, 7), at the internal ends of half axles (39, 41) with the intervention of other mechanical elements.

2. Controlled-transmission differential with electric engine and/or self-regulated according to claim 1, **characterized in that** the operation or efficiency parameters are fully controlled and variable, with mechanical or electric or electronic means.

3. Controlled-transmission differential with electric engine and/or self-regulated according to claim 1, **characterized in that** it is suitable for use either on the front and rear wheels, or simply as a differential of the rear wheel system.

4. Controlled-transmission differential with electric engine and/or self-regulated according to claim 1, **characterized in that** the command signals for the speed variation to the half axles (39, 41) may be derived from the pedal system, or by adhesion sensors or speed diversion sensors, or a combination thereof.

5. Controlled-transmission differential with electric engine and/or self-regulated according to claim 1, **characterized in that** the commands are executed by an electric engine arranged on the shell (1) of the differential and are transferred to a cylinder (31),in order to be executed, which is mounted on the rotor (15) of the electric engine (16), its internal periphery being configured to an endless screw.

6. Controlled-transmission differential with electric engine and/or self-regulated according to claim 1, **characterized in that** the way that the recognition of the needs for variation of the rotational speed of the half axles is derived from the adhesion and the direct active response, via the elliptic fissures (57) which are opened at the periphery of the extension of one of the internal disks (6) of the planets-half axles (39).

7. Controlled-transmission differential with electric engine and/or self-regulated according to claims 1 and 6, **characterized in that** on each fissure (57) there is a circular follower which even under the slightest difference in the rotational speed between the half axles (39, 41), for any reason related to the adhesion of the wheels on the ground, changes the angular position being moved into the fissure (57), in relation to the rotation shaft of the disk of the half axle planet, either converging to the center or removing to the periphery, as a reaction or from inertia, due to the created speed difference between planets.
